# EUROPÄISCHE PATENTSCHRIFT

(11) **EP 1 057 611 B1**
(45) Veröffentlichungstag und Bekanntmachung des Hinweises auf die Patenterteilung: **03.07.2002**
(21) Anmeldenummer: 00109954.8
(22) Anmeldetag: 11.05.2000
(51) Int. Cl.: B29C 47/08

(54) **Getriebe für einen Doppelschneckenextruder**
Transmission for twin screw extruder
Transmission pour extrudeuse à deux vis

(30) Priorität: 15.05.1999 DE 19922503
(43) Veröffentlichungstag der Anmeldung: 06.12.2000
(73) Patentinhaber: A. Friedr. Flender GmbH, 46395 Bocholt (DE)
(72) Erfinder: Taken, Wilhelmus M., 7103 GW Winterswijk (NL)
(74) Vertreter: Radünz, Ingo, Dipl.-Ing.

(56) Entgegenhaltungen:
- EP-A- 0 716 914
- EP-A- 0 849 064
- DE-A- 2 130 599
- DE-U- 29 819 820

## Beschreibung

Die Erfindung betrifft ein Getriebe für einen Doppelschneckenextruder mit den Merkmalen des Oberbegriffes des Patentanspruches 1.

Derartige Doppelschneckenextruder weisen zwei in einem geringen Abstand voneinander angeordnete, in gleicher oder in gegenläufiger Richtung rotierende Schneckenwellen auf. Als Folge davon müssen auch die Abtriebswellen des den Doppelschneckenextruder treibenden Getriebes eng nebeneinander liegen und mit gleich großem Drehmoment angetrieben werden. Das Getriebe selbst hat die Aufgabe, die Motordrehzahl zu reduzieren, das Drehmoment zu wandeln und zu verzweigen und die Axialkräfte aus dem Extruderprozeß aufzunehmen. Bei der Herstellung des Getriebegehäuses, das aus mehreren Teilgehäusen gesteht, ist äußerste Genauigkeit verlangt, da die genannten Getriebe hohe Leistungen zu übertragen haben. Die Anzahl der Teilfugen hat einen großen Einfluß auf die Kosten bei der mechanischen Bearbeitung des Gehäuses sowie auf die Montage des Getriebes.

Bei einem bekannten Getriebe für Doppelschneckenextruder (EP-OS 716 914) ist das Getriebegehäuse durch eine vertikale Teilfuge in eine antriebsseitige Gehäusehälfte und eine abtriebsseitige Gehäusehälfte aufgeteilt. In der antriebsseitigen Gehäusehälfte sind zusätzlich zu der Übersetzung die antriebsseitigen Enden der Verteilerwellen angeordnet. Auf diese Weise können das Getriebe und das Getriebegehäuse verkürzt werden. Zur Erleichterung der Montage des Getriebes ist das Gehäuse jeweils in der Höhe der Wellenebenen in Längsrichtung der Wellen geteilt, wobei das antriebsseitige Teilgehäuse zwei und das abtriebsseitige Teilgehäuse drei horizontale Teilebenen enthält. Mit der Anzahl der Teilfugen erhöht sich der Bearbeitungsaufwand für die Herstellung des Getriebegehäuses und verringert sich die Genauigkeit des Getriebes.

Ein anderes bekanntes Getriebe für einen Doppelschneckenextruder (EP-OS 849 064 bzw. DE-OS 196 53 331) ist in einem Gehäuse untergebracht, das durch eine einzige vertikal angeordnete, in Richtung der Längsachse der zweiten Abtriebswelle verlaufende Teilfuge in zwei unmittelbar miteinander verbundene Gehäusehälfte geteilt ist. Die zweite Abtriebswelle und die Verteilerwellen sind in der Teilfuge, die erste Abtriebswelle ist in der einen Gehäusehälfte, und die Antriebswelle ist in der anderen Gehäusehälfte angeordnet. Hierdurch wird die Anzahl der zu bearbeitenden Flanschflächen an dem Gehäuse verringert. Damit wird die Anzahl der Bearbeitungsfehler verringert und dadurch die Genauigkeit des Getriebes erhöht. Diese Ausbildung des Getriebegehäuses macht es allerdings erforderlich, daß' die Komponenten, die auf den innerhalb der Teilgehäuse liegenden Wellen angeordnet sind, durch eine Steckmontage eingebaut werden müssen. Dies erschwert die Gestaltung eines Übersetzungsteiles, wenn aus Gründen der Übertragung eines bestimmten Drehmomentes zwischen der Antriebswelle und der ersten Abtriebswelle eine oder mehrere Übersetzungsstufen vorgesehen werden müssen.

Aus der DE-U-29 819 820 ist ein Getriebe für einen Doppelschneckenextruder bekannt, dessen Getriebegehäuse durch eine einzige, horizontal oder vertikal verlaufende Teilfuge aufgeteilt sein soll. Über die Verteilung der Wellen auf die Gehäuseteile ist in der DE-U-29 819 820 nichts ausgesagt.

Der Erfindung liegt die Aufgabe zugrunde, das gattungsgemäße Getriebe so zu gestalten, daß die Ausführung des Getriebegehäuses vereinfacht und die Möglichkeit der Montage und Demontage des Getriebes verbessert wird.

Diese Aufgabe wird bei einem gattungsgemäßen Getriebe erfindungsgemäß durch die kennzeichnenden Merkmale des Patentanspruches 1 gelöst. Vorteilhafte Ausgestaltungen der Erfindung sind Gegenstand des Unteranspruchs.

Die Verwendung einer einzigen Teilfuge läßt bei dem erfindungsgemäßen ebenso wie bei dem gattungsgemäßen Getriebe gemäß der EP-OS 849 064 eine präzise und kostengünstige Fertigung des Getriebegehäuses zu. Darüber hinaus lassen sich in der horizontalen Teilfuge in einfacher Weise mehrere Übersetzungsstufen unterbringen. Ein weiterer entscheidender Vorteil des erfindungsgemäßen Getriebes liegt darin, daß die mechanische Bearbeitung der Aufnahmevorrichtungen unabhängig von dem Getriebegehäuse erfolgen kann. Dies erhöht die Genauigkeit und vermindert den Aufwand der Fertigung des Gehäuses und des Getriebes. Außerdem wird die Montage vereinfacht, wobei sich alle Montagearbeiten in der Gebrauchslage des Getriebes durchführen lassen.

Ein Ausführungsbeispiel der Erfindung ist in der Zeichnung dargestellt und wird im folgenden näher erläutert. Es zeigen:
- Fig. 1: den Querschnitt durch ein Getriebe für einen Doppelschneckenextruder,

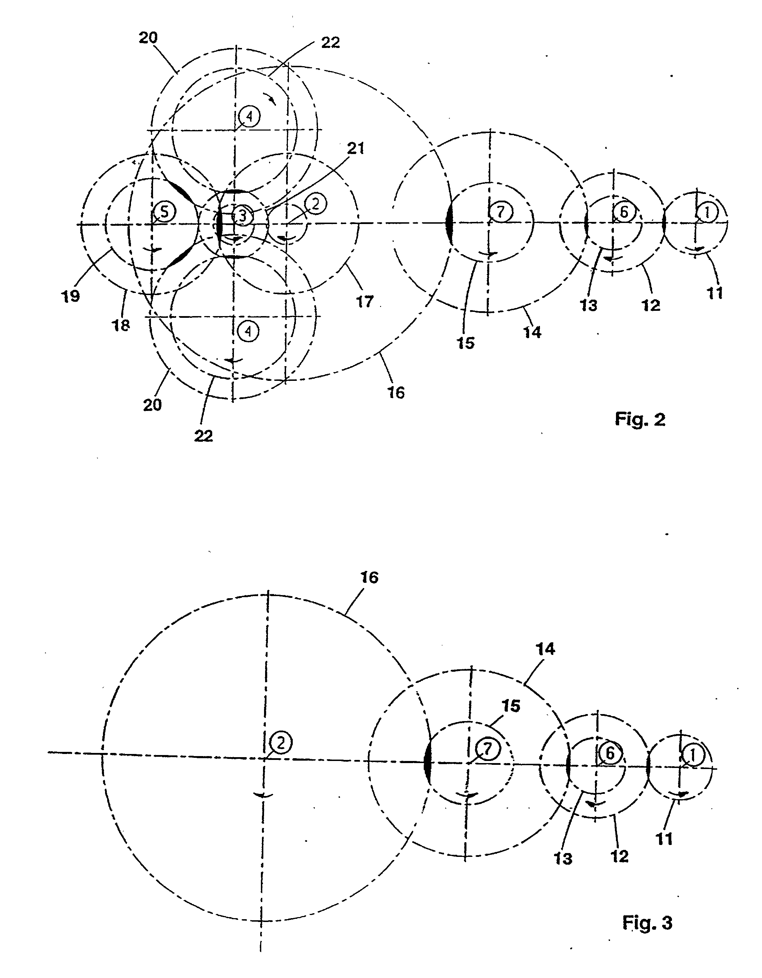

- Fig. 2: den Gesamträderplan des Getriebes
- Fig. 3: den Räderplan des Übersetzungsteiles des Getriebes gemäß Schnitt III - III nach Fig. 1,

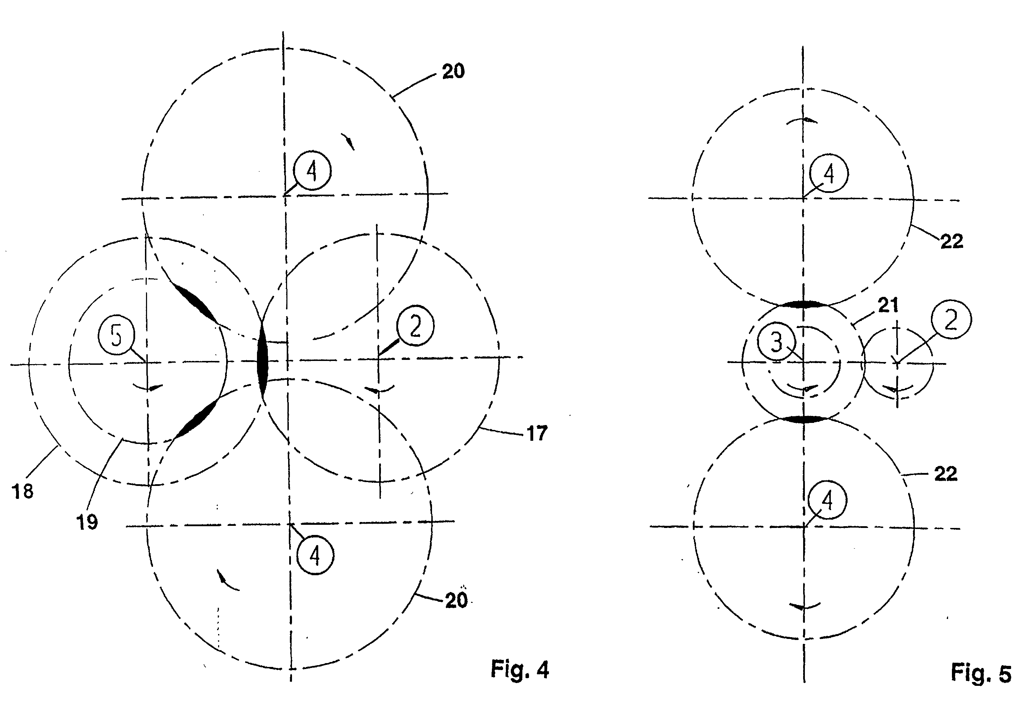

- Fig. 4: den Räderplan der Leistungsverteilergruppe gemäß Schnitt IV - IV nach Fig. 1,
- Fig. 5: den Räderplan der Leistungsrückführungsgruppe gemäß Schnitt V - V nach Fig. 1,

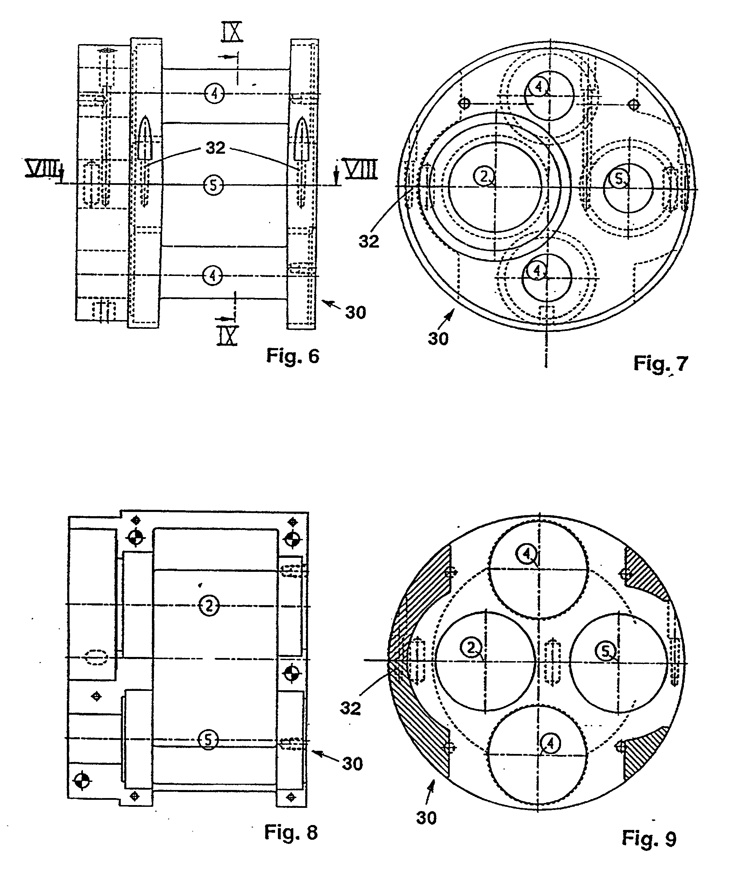

- Fig. 6: die Seitenansicht der Aufnahmevorrichtung für die Leistungsverteilergruppe,
- Fig. 7: die Vorderansicht zu Fig. 6,
- Fig. 8: den Schnitt VIII - VIII nach Fig. 6,
- Fig. 9: den Schnitt IX -IX nach Fig. 6,

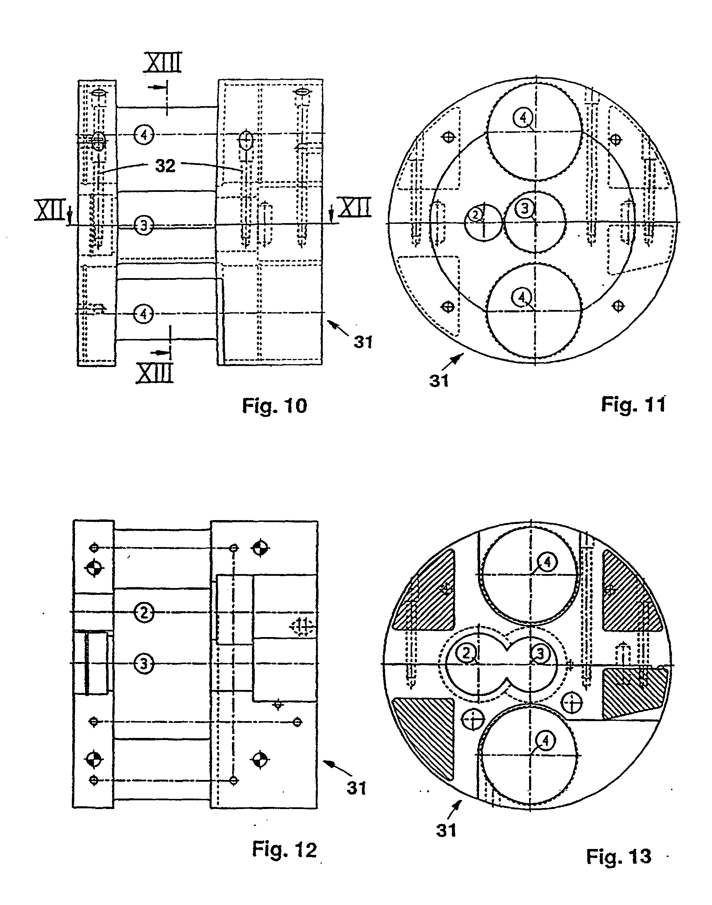

- Fig. 10: die Seitenansicht der Aufnahmevorrichtung für die Leistungsrückführungsgruppe,
- Fig. 11: die Vorderansicht zu Fig. 10,
- Fig. 12: den Schnitt XII - XII nach Fig. 10 und
- Fig. 13: den Schnitt XIII -XIII nach Fig. 10.

Das dargestellte Getriebe ist für den Antrieb eines Doppelschneckenextruders bestimmt. Es ist in einem Gehäuse 10 untergebracht und enthält eine Antriebswelle 1, eine ersten Abtriebswelle 2, eine zweite Abtriebswelle 3, zwei Verteilerwellen 4, eine Zwischenwelle 5, eine erste Getriebewelle 6 und eine zweite Getriebewelle 7. In der Zeichnung sind die zu diesen Wellen 1 bis 7 gehörenden Achsmittellagen durch die eingekreisten Bezugsziffern kenntlich gemacht.

Die Antriebswelle 1 ist über ein Übersetzungsteil mit der ersten Abtriebswelle 2 verbunden ist. Das Übersetzungsteil weist ein drehfest auf der Antriebswelle 1 angeordnetes Antriebsritzel 11 auf, das mit einem Zahnrad 12 in Eingriff steht, das auf der ersten Getriebewelle 6 drehfest angeordnet ist. Die erste Getriebewelle 6 trägt ein Ritzel 13, das mit einem auf der zweiten Getriebewelle 7 drehfest angeordneten Zahnrad 14 in Eingriff steht. Die zweiten Getriebewelle 7 trägt wiederum ein Ritzel 15, das mit einem auf der ersten Abtriebswelle 2 drehfest angeordneten Zahnrad 16 in Eingriff steht.

Von der ersten Abtriebswelle 2 aus wird die eingebrachte Leistung über eine Leistungsverteilergruppe aufgeteilt. Die Leistungsverteilergruppe umfaßt ein auf der ersten Abtriebswelle 2 drehfest angeordnetes Ritzel 17, das mit einem auf der Zwischenwelle 5 angeordnetes Zahnrad 18 in Eingriff steht. Diese Zwischenwelle 5 trägt ein Ritzel 19, das mit zwei Zahnrädern 20 in Eingriff steht, von denen jedes auf einer der zwei Verteilerwellen 4 drehfest angeordnet ist.

Von den Verteilerwellen 4 wird die verzweigte Leistung auf die zweite Abtriebswelle 3 über eine Leistungsrückführungsgruppe rückgeführt. Innerhalb der Leistungsrückführungsgruppe trägt die zweite Abtriebswelle 3 ein Ritzel 21, in das je ein auf den Verteilerwellen 4 drehfest angeordnete Zahnrad 22 eingreift.

Die Wellen 1 bis 7 sind in Radiallagern 23, 24, 25, 26, 27, 28 innerhalb des Gehäuses 10 gelagert. Die aus dem Gehäuse herausragenden Enden der eng nebeneinander liegenden Abtriebswellen werden mit den Schnecken des nicht gezeigten Doppelschneckenextruders gekoppelt. Zur Aufnahme der axial wirkenden Reaktionskräfte aus dem Extruderprozeß sind die beiden Abtriebswelle 2, 3 über Axiallager 29 in dem Gehäuse 10 abgestützt.

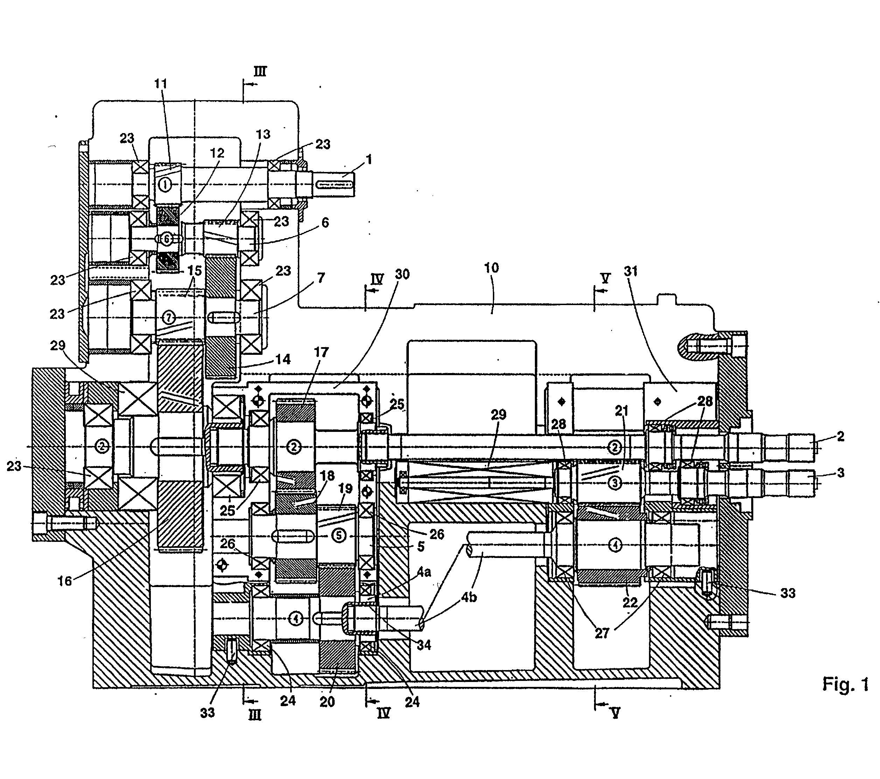

Das Gehäuse ist in einer horizontal verlaufenden Teilfuge in zwei Gehäuseteile aufgeteilt, die nach der Montage des Getriebes unmittelbar miteinander verbunden werden. In der Fig. 1 ist das untere Teilgehäuse zu sehen. In der horizontalen Teilfuge sind je zur Hälfte die Lagerungen des Übersetungsteiles, das heißt die Radiallager 23 der Antriebswelle 1, der beiden Getriebewellen und der ersten Abtriebswelle vorgesehen.

In den beiden Gehäuseteilen des Gehäuse sind beiderseits der horizontalen Teilfuge je zur Hälfte zwei Aufnahmebohrungen angeordnet. Jede Aufnahmebohrung nimmt eine Aufnahmevorrichtung 30, 31, die aus einem äußeren zylindrischen Rahmen besteht. Der Rahmen ist in zwei Hälften geteilt, die durch Schrauben 32 lösbar miteinander verbunden sind. Die Aufnahmevorrichtungen sind so in die Teilgehäuse des Gehäuses 10 eingesetzt, daß beiderseits der horizontalen Teilfuge jeweils eine Hälfte des Rahmens der Aufnahmevorrichtung 30, 31 sich befindet. Innerhalb des Gehäuses sind die Aufnahmevorrichtungen 30, 31 durch Stifte 33 positioniert.

Die Aufnahmevorrichtungen 30, 31 sind mit Bohrungen zur Aufnahme Lagerung der Leistungsaufteilergruppe bzw. der Leistungsrückführungsgruppe versehen. Die erste Aufnahmevorrichtung 30 weist in der unteren und der oberen Hälfte jeweils eine Bohrung auf, in die die Radiallager 24 der Verteilerwellen 4 eingesetzt sind. In der Teilungsebene sind Bohrungen vorgesehen, in die die Radiallager 25 der ersten Abtriebswelle 2 und die Radiallager 26 der Zwischenwelle 5 eingesetzt sind. Dabei umschließt der Rahmen der ersten Aufnahmevorrichtung die zu der Leistungsverteilergruppe gehörenden Zahnräder 18, 20 und Ritzel 17, 19.

Die zweite Aufnahmevorrichtung 31 weist in der unteren und der oberen Hälfte jeweils eine Bohrung auf, in die die Radiallager 27 der Verteilerwellen 4 eingesetzt sind. In der Teilungsebene sind Bohrungen vorgesehen, in die die Radiallager 28 der ersten und der zweiten Abtriebswelle 2, 3 eingesetzt sind. Dabei umschließt der Rahmen der zweiten Aufnahmevorrichtung die zu der Leistungsrückführungsgruppe gehörenden Zahnräder 22 und Ritzel 21.

Das Getriebe wird in der nachfolgend beschriebenen Weise montiert. In die untere Hälfte der ersten Aufnahmevorrichtung 30 wird das erste Teilstück 4a der Verteilerwelle 4 zusammen mit den Lagern 24 und dem Zahnrad 20 eingebaut. Anschließend wird die untere Hälfte der ersten Aufnahmevorrichtung 30 in das untere Teilgehäuse des Gehäuses 10 eingelegt und durch den Stift 33 gegen Verdrehen gesichert.

In die untere Hälfte der zweiten Aufnahmevorrichtung 31 wird das zweite Teilstück 4b der Verteilerwelle 4 zusammen mit den Lagern 27 und dem Zahnrad 22 eingebaut. Anschließend wird die untere Hälfte der zweiten Aufnahmevorrichtung 31 in das untere Teilgehäuse des Gehäuses 10 eingelegt. Hierbei werden durch axiales Verschieben die beiden Teilstücke 4a, 4b der Verteilerwelle 4 in einer Vielkeilverzahnung 34 zusammengefügt und sind somit drehfest miteinander verbunden. Die untere Hälfte der zweiten Aufnahmevorrichtung 31 wird durch den Stift 33 gegen Verdrehen gesichert. Die Wellen 1, 2, 3, 5, 6 und 7 liegen alle in einer horizontalen Ebene, die mit der horizontalen Teilfuge des Gehäuses 10 übereinstimmt, und können mit ihren aufgesetzten Komponenten (Lager und Zahnräder) in ihre Positionen eingelegt werden.

In die obere Hälfte der ersten Aufnahmevorrichtung 30 wird das erste Teilstück 4a der Verteilerwelle 4 zusammen mit den Lagern 24 und dem Zahnrad 20 eingebaut. Ebenso wird in die obere Hälfte der zweiten Aufnahmevorrichtung 31 das zweite Teilstück 4b der Verteilerwelle 4 zusammen mit den Lagern 27 und dem Zahnrad 22 eingebaut. Die beiden Teilstücke 4a, 4b der Verteilerwelle 4 werden in der in der Vielkeilverzahnung 34 zusammengefügt und sind somit drehtest miteinander verbunden.

Die beiden oberen Hälften der Aufnahmevorrichtungen 30, 31 werden gleichzeitig mit ihren Teilfugen auf die unteren Hälften gelegt und mittels der Schrauben 32 miteinander fest verbunden. Das obere Teilgehäuse des Gehäuses 10 kann hiernach auf das untere Teilgehäuse gebracht werden und an der horizontalen Teilfuge des Gehäuses 10 fest verbunden werden.

## Patentansprüche

1. Getriebe für einen Doppelschneckenextruder mit einem Gehäuse (10), wobei das Getriebe einen Übersetzungsteil bestehend aus einer Antriebswelle (1), gegebenenfalls aus einer oder mehreren Zahnradstufen, und aus einer ersten Abtriebswelle (2), eine Leistungsverteilergruppe, bestehend aus der ersten Abtriebswelle (2) und aus zwei mit der ersten Abtriebswelle (2) in Drehverbindung stehenden Verteilerwellen (4), und eine Leistungsrückführungsgruppe, bestehend aus den beiden Verteilerwellen (4) und aus einer mit den Verteilerwellen (4) in Drehverbindung stehenden zweiten Abtriebswelle (3), aufweist, und wobei das Gehäuse (10) durch eine einzige Teilfuge in zwei unmittelbar miteinander verbundenen Gehäuseteilen geteilt ist, **dadurch gekennzeichnet, daß** beiderseits der horizontalen Teilfuge je zur Hälfte die Wellen (1, 6, 7) des Übersetzungsteiles sowie zwei Aufnahmebohrungen angeordnet sind, in denen jeweils eine Aufnahmevorrichtung (30, 31) angeordnet ist, daß jede Aufnahmevorrichtung (30, 31) aus einem zylindrischen Rahmen besteht, der in zwei miteinander lösbar verbundene Hälften geteilt ist, die beiderseits der Ebene der horizontalen Teilfuge des Gehäuses (10) liegen, daß die Aufnahmevorrichtungen (30, 31) mit Bohrungen zur Aufnahme der Lagerung von Wellen versehen sind und daß die eine Aufnahmevorrichtung (30) die Lagerung der Wellen (2, 4, 5) der Leistungsverteilergruppe und die andere Aufnahmevorrichtung (31) die Lagerung der Wellen (3, 4) der Leistungsrückführungsgruppe und der ersten Abtriebswelle (2) aufnimmt.

2. Getriebe nach Anspruch 1, **dadurch gekennzeichnet, daß** jede Aufnahmevorrichtung (30, 31) in dem Gehäuse (10) durch einen oder mehrere Stifte (33) positioniert ist.

## Claims

1. Transmission for a double-worm extruder with a housing (10), wherein the transmission comprises a translation part consisting of a drive shaft (1), optionally of one or more gearwheel stages, and of a first driven shaft (2), a power distributor group consisting of the first driven shaft (2) and of two distributor shafts (4), which are disposed in rotational connection with the first driven shaft (2), and a power feedback group consisting of the two distributor shafts (4) and of a second driven shaft (3) disposed in rotational connection with the distributor shafts (4), and wherein the housing (10) is divided into two directly interconnected housing parts by a single parting join, **characterised in that** arranged on both sides of the horizontal parting join are respective halves of the shafts (1, 6, 7) of the translation part as well as two receiving bores in each of which a respective receiving device (30, 31) is arranged, that each receiving device (30, 31) consists of a cylindrical frame which is divided into two detachably interconnected halves which are disposed on both sides of the horizontal parting join of the housing (10), that the receiving devices (30, 31) are provided with bores for reception of the bearings of the shafts and that one receiving device (30) receives the bearings of the shafts (2, 4, 5) of the power distributor group and the other receiving device (31) receives the bearing of the shafts (3, 4) of the power feedback group and the first driven shaft (2).

2. Transmission according to claim 1, **characterised in that** each receiving device (30, 31) is positioned in the housing (10) by one or more pins (33).

## Revendications

1. Transmission pour une extrudeuse à deux vis comportant un boîtier (10), la transmission présentant une partie démultiplication composée d'un arbre moteur (1), éventuellement d'un ou de plusieurs trains de roues dentées, et d'un premier arbre de sortie (2), un groupe répartiteur de puissance composé du premier arbre de sortie (2) et de deux arbres répartiteurs (4) en liaison de rotation avec le premier arbre de sortie (2), et un groupe de renvoi de puissance composé des deux arbres répartiteurs (4) et d'un second arbre de sortie (3) en liaison de rotation avec les arbres répartiteurs (4), et le boîtier (10) étant partagé par un joint unique en deux parties de boîtier assemblées directement entre elles, **caractérisée en ce que** les arbres (1, 6, 7) de la partie démultiplication, ainsi que deux trous de réception, dans chacun desquels est disposé un dispositif de réception (30, 31), sont disposés chacun pour moitié de part et d'autre du joint horizontal, que chaque dispositif de réception (30, 31) est formé d'un cadre cylindrique partagé en deux moitiés assemblées entre elles de façon amovible, qui se situent de part et d'autre du plan du joint horizontal du boîtier (10), que les dispositifs de réception (30, 31) sont munis de trous pour recevoir le montage d'arbres, et que l'un des dispositifs de réception (30) reçoit le montage des arbres (2, 4, 5) du groupe répartiteur de puissance, et l'autre dispositif de réception (31) reçoit le montage des arbres (3, 4) du groupe de renvoi de puissance et du premier arbre de sortie (2).

2. Transmission suivant la revendication 1, **caractérisée en ce que** chaque dispositif de réception (30, 31) est positionné dans le boîtier (10) par une ou plusieurs goupilles (33).
